# FASCICULE DE BREVET EUROPEEN

(11) **EP 0 466 654 B1**
(45) Date de publication et mention de la délivrance du brevet: **01.09.1993**
(21) Numéro de dépôt: 91810534.7
(22) Date de dépôt: 08.07.1991
(51) Int. Cl.: G01D 5/12

(54) **Procédé et dispositif de mesure sans contact de déplacement et/ou de la position d'une pièce mobile**
Verfahren und Vorrichtung für kontaktlose Weg- oder Positionsmessung
Procedure and device for non-contact measuring of position or displacement

(30) Priorité: 13.07.1990 CH 2348/90
(43) Date de publication de la demande: 15.01.1992
(73) Titulaire: VIBRO-METER SA, CH-1700 Fribourg (CH)
(72) Inventeur: Schmid, Felix, CH-1782 Belfaux (CH); Feichtinger, Heinrich K., CH-8128 Hinteregg (CH)
(74) Mandataire: AMMANN INGENIEURS-CONSEILS EN PROPRIETE INTELLECTUELLE SA BERNE

(56) Documents cités:
- EP-A- 0 310 543
- DE-A- 1 623 242

## Description

La présente invention concerne un dispositif pour mesurer, sans contact, le déplacement et/ou la position d'une pièce mobile envers une seconde pièce, par lecture d'un motif de propriétés magnétiques différentes du fond, au moyen d'une tête de lecture magnétique.

On connaît déjà des dispositifs de mesure similaires. Par exemple, le EP-Al-0,027,308 divulgue une échelle magnétique pour mesurer un déplacement, comprenant un substrat magnétique localement magnétisé. Le FR-A-2 030 713 décrit une bande magnétique bien connue en soi, par exemple pour enregistreurs à cassette, comprenant des informations codées espacées. Le "IBM Technical disclosure bulletin", Vol. 6, no 2, juillet 1963, mentionne à la page 14 le fait qu'on peut rendre un matériau amagnétique tel que le nickel revêtu d'une couche de Kanigan magnétique en le chauffant à environ 400° C.

Le DE-Al-l 623 242 divulgue un système de mesure basé sur la détection d'un champ magnétique qui augmente continuellement en direction de longueur.

Finalement, le EP-Al-0 310 543 décrit un motif magnétique dans la région de surface d'un substrat magnétique, la force magnétique du motif étant différente de celle du substrat.

Le but de l'invention est de créer un dispositif et un procédé de mesure plus simples que les systèmes connus et qui évitent les désavantages et inconvénients de ceux-ci.

Le dispositif de mesure, le procédé de mesure et le procédé de fabrication du dispositif selon l'invention font l'objet des revendications indépendantes tandis que les modes d'exécution spéciaux sont définis dans les revendications dépendantes.

Une exécution préférée de l'invention sera d'abord décrite en termes généraux.

Les termes "ferromagnétique" et "magnétisable" comme utilisés dans le présent document, sont à comprendre comme définis dans la littérature, par exemple dans "Elektrotechnik für Praktiker", H. R. Ris, Buchverlag Elektrotechnik Aarau 1990, page 209. Selon cette définition et en accord avec l'usage commun de ces termes, ils englobent, dans le sens de l'invention, les alliages à base de fer magnétiques doux, de basse coercitivité, et magnétiques durs, ces deux alliages pouvant en effet être formés lors de la réduction de la concentration du métalloïde et de la déstabilisation résultante de la structure austénitique.

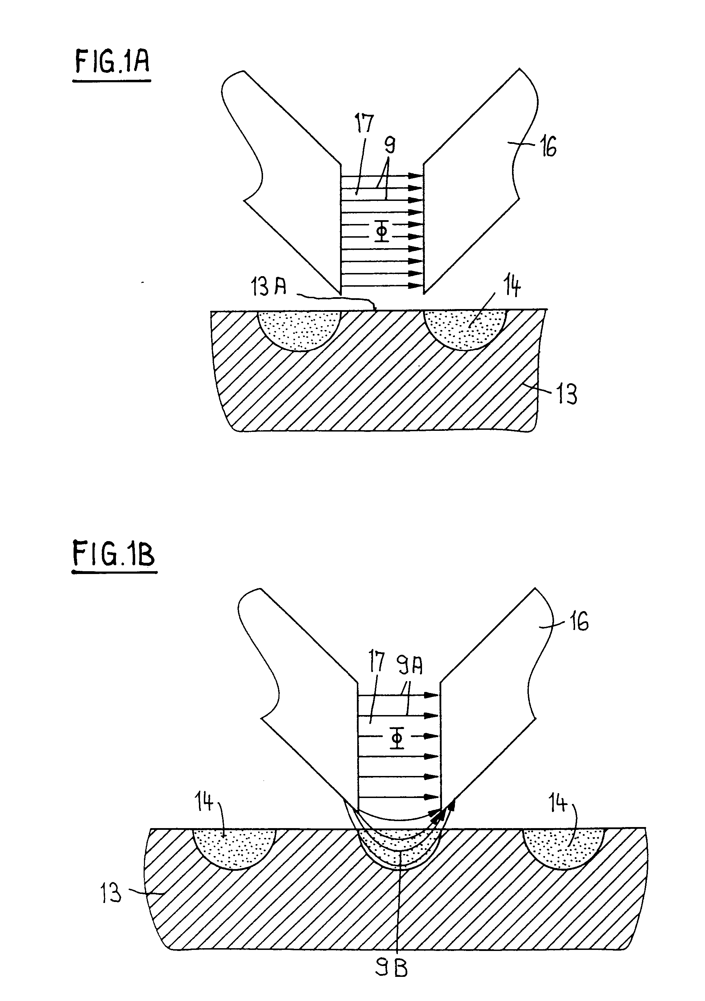

La stabilité de la structure austénitique étant assurée par la présence d'un métalloïde en solution interstitielle, le motif de propriétés magnétique différentielles est réalisé par un échauffement local d'une intensité élevée qui provoque un appauvrissement de ce métalloïde dans la zone chauffée destabilisant ainsi localement la structure austénitique amagnétique au profit d'une structure ferritique ferromagnétique. Si le motif dans la surface de l'une des deux pièces consiste par exemple en une suite de zones austénitiques amagnétiques et des zones ferritiques ferromagnétiques, il est possible de mesurer, par incrément, le déplacement de la pièce mobile à l'aide d'un compteur réversible (connu en soi) comptant les impulsions produites par le passage de la tête de lecture sur le motif (figure 1).

Une autre caractéristique de l'invention consiste en ce que par dérivation successive du déplacement par rapport au temps, il est possible de déterminer vitesse et accélération de la pièce mobile.

De plus si le motif est composé d'un codage particulier, il est possible, à l'aide de têtes de lecture multiples, de connaître la position absolue de la pièce mobile.

Le motif peut être apporté sur une tige pour détecter des déplacements linéaires ou sur un disque pour détecter des déplacements angulaires.

Le codage mentionné ci-dessus ne se limite pas seulement à connaître des grandeurs telle que position, vitesse ou accélération mais permet aussi de coder l'organe de la machine qui envoie le signal par exemple: numéro du verin ou de la vanne, numéro du capteur, course maximale ou autres paramètres qui permettent d'identifier le dispositif. Un code de sécurité peut aussi être nécessaire pour confirmer que l'échelle de mesure soit accouplée avec la tête de lecture adéquate. Ce codage, sous forme binaire peut être apporté soit en parallèle à l'échelle, soit en début ou en fin de course du dispositif mobile.

Il existe des procédés de mesure où l'information magnétique est réalisé en appliquant par exemple une bande magnétique à la surface de l'une des pièces. Or un tel support ne peut être rajouté que s'il ne perturbe pas la fonction ou le fonctionnement de cette pièce, ce qui serait le cas par exemple si cette pièce est la tige d'un piston hydraulique ou pneumatique.

D'autre part il existe un procédé évitant l'inconvénient mentionné qui ne nécessite pas l'apport d'un support de motif magnétique à la surface de ladite pièce, ce procédé consiste en ce que la surface est composée d'un acier ferromagnétique usuel qui est traitée par un faisceau laser produisant un échauffement local créant ainsi des zones par exemple sous forme de points ou de traits perpendiculaires à la direction du déplacement des pièces, ces zones ayant des propriétés magnétiques différentes de celles du fond.

Avec ce procédé on constate que les zones de transition sont moins marquées et qu'il est difficile de lire l'information sur ce fond magnétique.

L'invention a pour but d'éviter ces inconvénients en utilisant un fond non magnétique réalisé par l'utilisation d'un acier austénitique, dans la surface duquel est créé un marquage ou motif à structure ferritique ferromagnétique, ce qui permet de détecter de telles zones facilement.

Il est prévu d'apporter un tel marquage au moyen d'un échauffement très localisé ce qui est possible avec un faisceau laser, un faisceau d'électrons, un faisceau d'ions, par un arc électrique ou une décharge électrique de courte durée ou autres. Par cette technique la largeur et la profondeur d'une marque sont normalement du même ordre de grandeur. Le fait que l'invention prévoit une structure de base non magnétique, permet de lire des marques très fines et très denses et par conséquence une très haute résolution du procédé de mesure.

Un autre avantage de l'invention consiste dans le fait que la pièce comportant le motif ferromagnétique peut faire partie intégrante d'un dispositif de machine.

Il est bien connu que certains éléments d'alliage du fer ont une action forte sur sa structure, provoquant la stabilisation soit de la structure ferritique soit de la structure austénitique. Ces éléments sont de préférence l'azote et le carbone en solution interstitielle dans le fer. Ces deux éléments possèdent une action très marquée sur l'élargissement du champ d'existence de l'austénite. C'est pour cela que des aciers en teneur élevée d'azote ont été élaborés pendant la deuxième guerre mondiale pour épargner le nickel rare.

L'addition du métalloide aux aciers a aussi d'autres raisons: le carbone ainsi que l'azote, en solution interstitielle, augmentent la dureté respectivement la limite élastique et la résistance à la traction des aciers, mais contrairement au carbone l'addition du de l'azote n'est pas accompagnée d'une aussi grande perte de ténacité.

C'est pour cela qu'en utilisant un acier inox contenant par exemple 18 % de chrome, 18 % de manganèse, et en ajoutant 0,5 % d'azote et moins de 0,05 % de carbone, il est possible de réaliser un acier dont la combinaison de résistance à la traction et ténacité représente pratiquement un maximum possible aujourd'hui.

Si la teneur en azote est inférieure de 0,45 - 0,48 %, la structure austénitique est remplacée par une structure ferritique, ou, respectivement, l'austénite se transforme en ferrite lorsque l'azote est enlevé, par exemple par diffusion, par suite d'un chauffage local.

En plus, l'azote a pour effet d'augmenter la dureté par écrouissage et la résistance à la corrosion, ce qui fait qu'un tel acier est tout à fait utilisable dans un dispositif mécanique fortement sollicité.

Une autre propriété des éléments métalloides carbone et azote consiste dans le fait que leur dissociation et solution interstitielle, à cause de leur volume atomique relativement petit, leur coefficient de diffusion est bien supérieur à la plupart des éléments d'alliage du fer, ce qui facilite la production des marques formant le motif ferromagnétique.

Les alliages non magnétiques à forte teneur de chrome ont de plus une propriété bien intéressante qui diffère du comportement de solubilité normale des gaz dans les métaux. Normalement la solubilité d'un gaz dans un métal augmente avec la température et spécialement en passant de l'état solide à l'état liquide, avec l'azote dans ces alliages c'est le contraire: sa solubilité diminue avec l'augmentation de la température dans l'état solide, elle diminue de plus pendant le procédé de fusion et elle continue de diminuer aussi avec la surchauffe du métal liquide.

L'efficacité de la formation de marques magnétiques dans le fond amagnétique par chauffage peut encore être augmentée si l'on crée une différence de concentration du métalloide à la surface de la pièce. Cela veut dire que, si l'on enlève constamment de la surface chauffée le métalloide libéré sous l'influence de la chaleur, on augmente la vitesse de diffusion vers cette surface. Cet enlèvement peut être accompli en donnant au métalloide libéré l'occasion de quitter la zone superficielle chauffée, en créant une atmosphère pauvre en métalloide, par exemple, dans le cas de l'azote, soit un vide soit une atmosphère de gaz inerte ne contenant pas d'azote, et dans le cas de carbone, une atmosphère oxydante apte à transformer le carbone en CO ou CO₂ mais pas assez agressive pour provoquer une oxydation notable de la surface entière, soit une atmosphère réductrice (H₂) pour transformer le carbone en méthane ou similaires.

L'invention sera expliquée plus en détail encore en faisant référence au dessins dans lequel:
- les fig. 1A et 1B: montrent schématiquement le principe de fonctionnement de l'invention,
- la fig. 2: représente une première application de procédé (premier dispositif) selon l'invention,
- la fig. 3: est une seconde application du procédé de l'invention (second dispositif),
- la fig. 4: est une troisième application du procédé de l'invention (troisième dispositif), et
- la fig. 5: représente une application de mesure angulaire (quatrième dispositif).

Les fig. 1A et 1B montrent très schématiquement le principe de détection de codages selon l'invention.

Lorsque l'entrefer 17 d'une tête de lecture 16, faisant partie d'un circuit magnétique, placée au-dessus d'une pièce en acier austénitique amagnétique 13 et plus précisément au-dessus d'une région non marquée 13A, le champ magnétique Φ représenté par les lignes de force magnétique 9, a une certaine force donnée. Par contre, lorsque l'entrefer 17 se trouve au-dessus d'un marquage ferritique ferromagnétique 14, une partie 9B des lignes magnétiques dans l'entrefer 17 sont déviées dans le marquage 14. Les lignes magnétiques 9A restant dans l'entrefer 17 ont une densité moindre ce qui crée dans la tête de lecture 16 un changement du flux magnétique détectable par un enroulement électrique approprié.

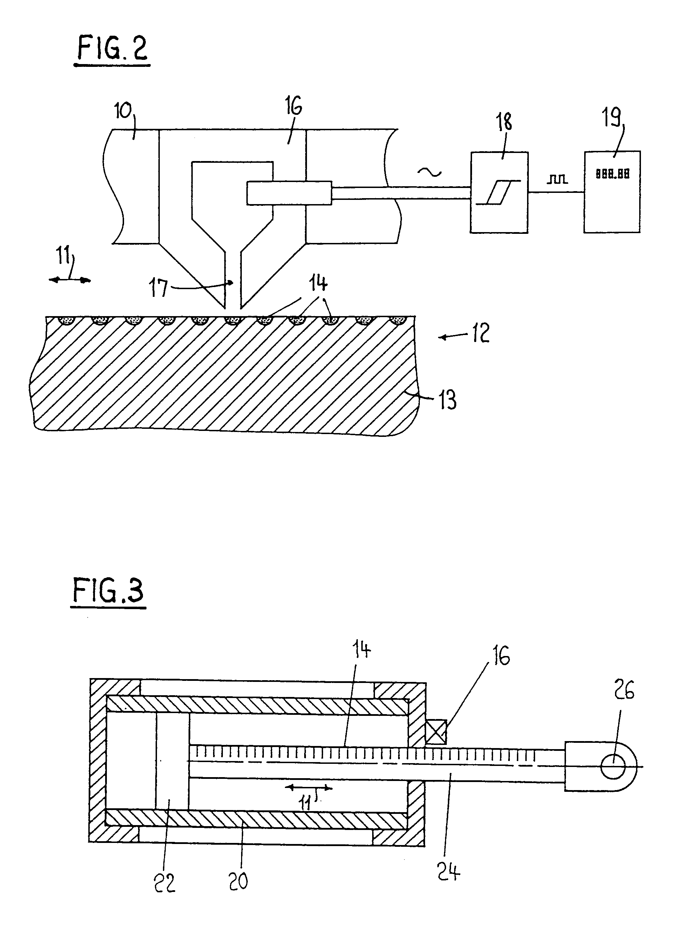

Dans la fig. 2, on a représenté le cas où l'on veut mesurer le déplacement ou bien la vitesse ou l'accélération du déplacement linéaire selon la flèche 11 de deux pièces 10 et 12 dont l'une est mobile par rapport à l'autre. La pièce 12 comporte une zone amagnétique en acier austénitique 13 dont surface présente des marques ferromagnétiques 14 en acier ferritique, formant un motif prédéterminé et étant produites par échauffement local de la surface de la pièce 12.

La pièce 10 comporte une tête de lecture magnétique 16 dont l'entrefer 17 est dirigé vers le motif magnétique des marques 14. Lors du déplacement de la pièce 10 par rapport à la pièce 12, les marques ferromagnétiques 14 produisent une variation de l'induction dans l'entrefer 17 produisant ainsi une perturbation dans le circuit magnétique de la tête 16. Cette perturbation peut être détectée au moyen d'éléments sensibles aux variations de champ magnétique, par exemple un élément de Hall ou une magnétorésistance en association avec un aimant permantent. Le signal analogique sortant de la tête 16 est transformé en impulsions électriques, par exemple au moyen d'un trigger de Schmidt 18. Ces impulsions électriques sont ensuite transmises à une électronique de comptage 19. Le nombre de ces impulsions ou leurs dérivées par rapport au temps détermine la valeur du déplacement ou sa vitesse ou accélération, respectivement.

La fig. 3 représente une seconde application pratique. Les marques 14 font partie d'une tige de piston 24 qui est reliée à un piston 22 se déplaçant dans un cylindre hydraulique 20 selon la flèche 11. La tige 24 peut être raccordée à d'autres éléments mécaniques par l'oeuillet 26. La tête de lecture 16 coopère avec les marques 14 de manière décrite ci-dessus.

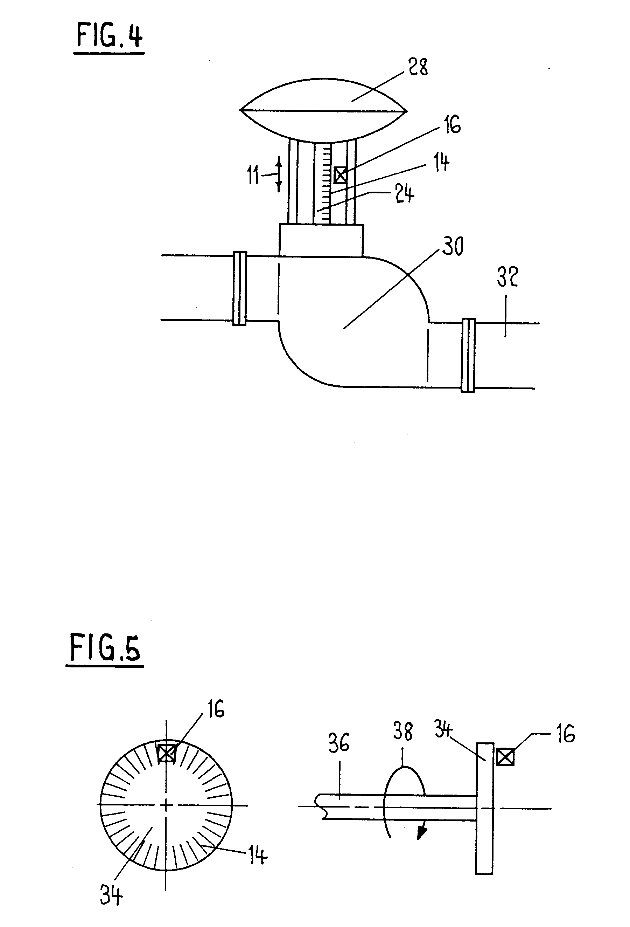

On a représenté dans la fig. 4 la commande de position d'une vanne 30 insérée dans une canalisation 32. L'activateur hydraulique, pneumatique, électrique ou mécanique 28 commande la tige de vanne 24 qui comporte le motif ferromagnétique dont le déplacement selon la flèche 11 est lu par la tête de lecture 16. Par comptage des impulsions crées par le déplacement des marques 14 par rapport à la tête 16, on peut déterminer à distance l'état d'ouverture de la vanne.

La fig. 5 montre enfin la détermination de la position ou de la vitesse d'un arbre 36 qui comporte, à cette fin, un disque 34 austénitique présentant des marques ferromagnétiques 14. Le passage de celles-ci devant une tête de lecture 16 donne les informations sur le déplacement rotatif du disque 34 et, par conséquent, de l'arbre 36 selon la flèche 38.

La somme de toutes les propriétés décrites auparavant permet de réaliser le but de l'invention, c'est-à-dire la production d'un motif localement ferromagnétique contre un fond non magnétique.

## Revendications

1. Dispositif de mesure pour mesurer, sans contact, le rapport linéaire ou angulaire d'une pièce mobile envers une autre pièce par lecture d'un motif ferromagnétique, caractérisé en ce qu'il comprend un motif ferromagnétique sur un fond non magnétique, faisant partie d'une de deux pièces dont l'une est mobile par rapport à l'autre, et une tête de lecture magnétique incorporée à l'autre pièce, agencée pour détecter le dit motif ferromagnétique, et en ce que le fond non magnétique de la pièce comportant le motif ferromagnétique, est un acier austénitique amagnétique et que le dit motif ferromagnétique est constitué par des zones créées par diffusion d'un métalloïde en solution interstitielle.

2. Dispositif selon la revendication 1, caractérisé en ce que le motif ferromagnétique fait partie intégrante d'un dispositif de machine.

3. Dispositif selon la revendication 1 ou 2,
caractérisé en ce qu'il comporte en plus un codage de données additionnelles, autres que le rapport de déplacement d'une pièce par rapport à une autre, ce codage de données additionnelles comprenant un motif ferromagnétique sur un fond non magnétique.

4. Dispositif selon la revendication 3, caractérisé en ce que le codage de données additionnelles est un codage d'identification.

5. Dispositif selon la revendication 3 ou 4, caractérisé en ce que le codage de données additionnelles est un codage de sécurité.

6. Procédé de fabrication du dispositif selon l'une quelconque des revendications 1 à 5, caractérisé en ce que le motif ferromagnétique est obtenu par un traitement thermique localisé et selon le motif désiré, d'un fond en acier austénitique stabilisé par un métalloïde en solution interstitielle dans le fer.

7. Procédé selon la revendication 6, caractérisé en ce que le métalloïde est l'azote en solution interstitielle.

8. Procédé selon la revendication 6, caractérisé en ce que le métalloïde est le carbone en solution interstitielle.

9. Procédé selon l'une quelconque des revendications 6 à 8, caractérisé en ce que la surface localement chauffée de l'acier austénitique est tenue en contact avec une atmosphère pauvre en métalloïde, ce dernier quittant la zone chauffée par diffusion suivie d'une migration dans ladite atmosphère.

10. Procédé selon les revendications 7 et 9, caractérisé en ce que ladite l'atmosphère présente une basse pression partielle en azote, soit par la présence d'un vide soit par celle d'un gaz inerte autre que l'azote.

11. Procédé selon les revendications 8 et 9, caractérisé en ce que ladite atmosphère présente une pression partielle d'oxygène apte à transformer le carbone transporté par diffusion à la surface, en monoxyde de carbone, mais ne pas assez agressive pour provoquer une oxydation substantielle de la surface de l'acier.

12. Procédé selon les revendications 8 et 9, caractérisé en ce que ladite atmosphère contient une pression partielle d'hydrogène qui transforme le carbone, transporté par diffusion de la surface, en méthane.

13. Procédé selon la revendication 6, caractérisé en ce que ledit traitement thermique local est produit par un faisceau laser.

14. Procédé selon la revendication 6, caractérisé en ce que ledit traitement thermique local est produit par un faisceau d'électrons.

15. Procédé selon la revendication 6, caractérisé en ce que ledit traitement thermique local est produit par un faisceau d'ions.

16. Procédé selon la revendication 6, caractérisé en ce que ledit traitement thermique local est produit par un arc électrique.

17. Procédé selon la revendication 16, caractérisé en ce que ledit traitement thermique local est produit par un décharge électrique de brève durée.

18. Procédé pour mesurer, sans contact, le rapport linéaire ou angulaire d'une pièce mobile envers une autre pièce par lecture d'un motif ferromagnétique à l'aide du dispositif selon l'une quelconque des revendications 1 à 5, caractérisé en ce que l'une des pièces incorpore la tête de lecture magnétique et l'autre pièce comporte le motif ferromagnétique sur un fond non magnétique, et en ce que le fond non magnétique de la pièce comportant le motif ferromagnétique, est un acier austénitique amagnétique et que le dit motif ferromagnétique est constitué par des zones créées par diffusion d'un métalloïde en solution interstitielle.

19. Procédé selon la revendication 18, caractérisé en ce que l'une ou l'autre des pièces font partie d'un dispositif mécanique, et que la position et/ou le déplacement, la vitesse et/ou l'accélération de la pièce sont à mesurer.

20. Procédé selon la revendication 18, caractérisé en ce que le fond amagnétique est en acier austénitique dont la structure est stabilisée par l'ajout d'un métalloïde.

21. Procédé selon la revendication 18 ou 19, caractérisé en ce qu'on mesure la position, le déplacement, la vitesse ou l'accélération linéaires d'une pièce par rapport à l'autre.

22. Procédé selon la revendication 18 ou 19,caractérisé en ce qu'on mesure la position, le déplacement, la vitesse ou l'accélération angulaires d'une pièce par rapport à l'autre.

## Patentansprüche

1. Messvorrichtung zur kontaktlosen Messung der geradlinigen oder winkelmässigen Beziehung eines beweglichen Teils zu einem anderen Teil durch Lesen eines ferromagnetischen Musters, dadurch gekenzeichnet, dass sie ein ferromagnetisches Muster auf einem nichtmagnetischen Untergrund aufweist, der zu einem der zwei Teile gehört, von welchen der eine in bezug auf den anderen beweglich ist, sowie einen in den anderen Teil eingebauten magnetischen Lesekopf, der zur Erfassung des ferromagnetischen Musters eingerichtet ist, und dass der nichtmagnetische Untergrund des Teils mit dem ferromagnetischen Muster ein nichtmagnetischer austenitischer Stahl ist und das ferromagnetische Muster aus Bereichen besteht, die durch Diffusion eines Nichtmetalls in Zwischengitterlösung erzeugt werden.

2. Vorrichtung nach Anspruch 1, dadurch gekennzeichnet, dass das ferromagnetische Muster einen integrierenden Bestandteil einer Maschine bildet.

3. Vorrichtung nach Anspruch 1 oder 2, dadurch gekennzeichnet, dass sie ausserdem eine Codierung von zusätzlichen Daten ausser der Verschiebung eines Teils gegenüber dem anderen aufweist, wobei diese Codierung zusätzlicher Daten ein ferromagnetisches Muster auf nichtmagnetischem Untergrund enthält.

4. Vorrichtung nach Anspruch 3, dadurch gekennzeichnet, dass die Codierung von zusätzlichen Daten ein Kennzeichnungscode ist.

5. Vorrichtung nach Anspruch 3 oder 4, dadurch gekennzeichnet, dass die Codierung von zusätzlichen Daten ein Sicherheitscode ist.

6. Verfahren zur Herstellung der Vorrichtung nach einem der Ansprüche 1 bis 5, dadurch gekennzeichnet, dass das ferromagnetische Muster durch eine örtliche thermische Behandlung eines Untergrunds aus austenitischem Stahl gemäss dem gewünschten Muster erzeugt wird, der durch ein Nichtmetall in Zwischengitterlösung stabilisiert ist.

7. Verfahren nach Anspruch 6, dadurch gekennzeichnet, dass das Nichtmetall Stickstoff in Zwischengitterlösung ist.

8. Verfahren nach Anspruch 6, dadurch gekennzeichnet, dass das Nichtmetall Kohlenstoff in Zwischengitterlösung ist.

9. Verfahren nach einem der Ansprüche 6 bis 8, dadurch gekennzeichnet, dass die örtlich erhitzte Oberfläche des austenitischen Stahls in Berührung mit einer am betreffenden Nichtmetall armen Atmosphäre gebracht wird, wobei das Nichtmetall den erhitzten Bereich durch Diffusion mit nachfolgender Migration in die genannte Atmosphäre verlässt.

10. Verfahren nach den Ansprüchen 7 und 9, dadurch gekennzeichnet, dass die Atmosphäre einen niedrigen Stickstoff-Partialdruck aufweist, der entweder durch Vakuum oder durch die Anwesenheit eines anderen Edelgases als Stickstoff erzeugt wird.

11. Verfahren nach den Ansprüchen 8 und 9, dadurch gekennzeichnet, dass die Atmosphäre einen Sauerstoff-Partialdruck aufweist, der geeignet ist, den durch Diffusion an die Oberfläche gebrachten Kohlenstoff in Kohlenmonoxid umzuwandeln, jedoch nicht genügend aggressiv, um eine wesentliche Oxidation der Stahloberfläche hervorzurufen.

12. Verfahren nach den Ansprüchen 8 und 9, dadurch gekennzeichnet, dass die Atmosphäre einen Wasserstoff-Partialdruck aufweist, der den durch Diffusion an die Oberfläche gebrachten Kohlenstoff in Methan umwandelt.

13. Verfahren nach Anspruch 6, dadurch gekennzeichnet, dass die örtliche thermische Behandlung mit einem Laserstrahl erfolgt.

14. Verfahren nach Anspruch 6, dadurch gekennzeichnet, dass die örtliche thermische Behandlung mit einem Elektronenstrahl erfolgt.

15. Verfahren nach Anspruch 6, dadurch gekennzeichnet, dass die örtliche thermische Behandlung mit einem Ionenstrahl erfolgt.

16. Verfahren nach Anspruch 6, dadurch gekennzeichnet, dass die örtliche thermische Behandlung mit einem Lichtbogen erfolgt.

17. Verfahren nach Anspruch 16, dadurch gekennzeichnet, dass die örtliche thermische Behandlung durch eine kurzzeitige elektrische Entladung erfolgt.

18. Verfahren zur kontaktlosen Messung der geradlinigen oder der winkelmässigen Beziehung eines beweglichen Teils zu einem anderen Teil durch Lesen eines ferromagnetischen Musters mit Hilfe der Vorrichtung nach einem der Ansprüche 1 bis 5, dadurch gekennzeichnet, dass der eine Teil den magnetischen Lesekopf enthält und der andere Teil das ferromagnetische Muster auf nichtmagnetischem Untergrund aufweist, und dass der nichtmagnetische Untergrund des Teils mit dem ferromagnetischen Muster ein austenitischer, nichtmagnetischer Stahl ist und das ferromagnetische Muster aus Bereichen besteht, welche durch Diffusion eines Nichtmetalls in Zwischengitterlösung erzeugt werden.

19. Verfahren nach Anspruch 18, dadurch gekennzeichnet, dass der eine oder der andere Teil zu einer mechanischen Vorrichtung gehört, und dass die Stellung und/oder die Verschiebung, die Geschwindigkeit und/oder die Beschleunigung des Teils zu messen sind.

20. Verfahren nach Anspruch 18, dadurch gekennzeichnet, dass der nichtmagnetische Untergrund aus einem austenitischen Stahl besteht, dessen Struktur durch Zugabe eines Nichtmetalls stabilisiert ist.

21. Verfahren nach Anspruch 18 oder 19, dadurch gekennzeichnet, dass die geradlinige Stellung, Verschiebung, Geschwindigkeit oder Beschleunigung eines Teils in bezug auf den anderen gemessen wird.

22. Verfahren nach Anspruch 18 oder 19, dadurch gekennzeichnet, dass die Winkelstellung, -verschiebung, -geschwindigkeit oder -beschleunigung eines Teils in bezug auf den andern gemessen wird.

## Claims

1. A measuring device for the contactless measure of the linear or angular relation of one movable piece with respect to another piece by reading a ferromagnetic pattern, characterised in that it comprises a ferromagnetic pattern on a non-magnetic basic substrate belonging to one of said two pieces, one of which is movable with respect to the other, and a reading head which is incorporated in said other piece and adapted to detecting said ferromagnetic pattern, and in that the non-magnetic substrate of the piece comprising said ferromagnetic pattern is an austenitic, non-magnetic steel, and said ferromagnetic pattern is constituted of zones which are created by diffusion of a metalloid in interstitial solution.

2. Device according to claim 1, characterised in that said ferromagnetic pattern is an integral part of a machine device.

3. Device according to claim 1 or 2, characterised in that it further comprises an encoding of additional data other than the displacement of one piece with respect to another, said encoding of additional data comprising a ferromagnetic pattern on a non-magnetic substrate.

4. Device according to claim 3, characterised in that said encoding of additional data is an identification code.

5. Device according to claim 3 or 4, characterised in that said encoding of additional data is a security code.

6. Method for the manufacture of the device according to any one of claims 1 to 5, characterised in that said ferromagnetic pattern is obtained by a localised thermal treatment, according to the desired pattern, of a substrate of austenitic steel which is stabilised by a metalloid in interstitial solution in the iron.

7. Method according to claim 6, characterised in that said metalloid is nitrogen in interstitial solution.

8. Method according to claim 6, characterised in that said metalloid is carbon in interstitial solution.

9. Method according to any one of claims 6 to 8, characterised in that the locally heated surface of said austenitic steel is brought into contact with a low-metalloid atmosphere, the latter leaving the heated zone by diffusion, followed by a migration into said atmosphere.

10. Method according to claims 7 and 9, characterised in that said atmosphere has a low partial pressure of nitrogen, either by a vacuum or by the presence of an inert gas other than nitrogen.

11. Method according to claims 8 and 9, characterised in that said atmosphere has a partial pressure of oxygen which is capable of transforming the carbon which is transported to the surface by diffusion into carbon monoxide, but not aggressive enough to produce a substantial oxidation of the steel surface.

12. Method according to claims 8 and 9, characterized in that said atmosphere contains a partial pressure of hydrogen which transforms the carbon which is transported to the surface by diffusion into methane.

13. Method according to claim 6, characterised in that said local thermal treatment is effected by a laser beam.

14. Method according to claim 6, characterised in that said local thermal treatment is effected by an electron beam.

15. Method according to claim 6, characterised in that said local thermal treatment is effected by a beam of ions.

16. Method according to claim 6, characterised in that said local thermal treatment is effected by an electric arc.

17. Method according to claim 16, characterised in that said local thermal treatment is effected by an electric discharge of short duration.

18. Method for a contactless measure of the linear or angular relation of a movable piece with respect to another piece by reading a ferromagnetic pattern by means of the device according to any one of claims 1 to 5, characterised in that one of said pieces holds said magnetic reading head, and the other piece is provided with said ferromagnetic pattern on a non-magnetic substrate, and in that said non-magnetic substrate of said piece comprising said ferromagnetic pattern is an austenitic, non-magnetic steel, and said ferromagnetic pattern is consituted of zones which are created by diffusion of a metalloid in interstitial solution.

19. Method according to claim 18, characterised in that one or the other of said pieces belong to a mechanical device, and the position and/or the displacement, the speed and/or the acceleration of said piece are to be measured.

20. Method according to claim 18, characterised in that said non-magnetic substrate is made of austenitic steel whose structure is stabilised by the addition of a metalloid.

21. Method according to claim 18 or 19, characterised in that the linear position, displacement, speed, or acceleration of one piece with respect to the other is measured.

22. Method according to claim 18 or 19, characterised in that the angular position, displacement, speed or acceleration of one piece with respect to the other is measured.
